# FASCICULE DE BREVET EUROPEEN

(11) **EP 3 728 142 B1**
(45) Date de publication et mention de la délivrance du brevet: **06.10.2021**
(21) Numéro de dépôt: 18829363.3
(22) Date de dépôt: 19.12.2018
(51) Int. Cl.: C03B 5/43, C03B 5/42, C04B 35/109

(54) **PIECE A NEZ**
NASENSTÜCK
NOSEPIECE

(30) Priorité: 21.12.2017 FR 1762834
(43) Date de publication de la demande: 28.10.2020
(73) Titulaire: SAINT-GOBAIN CENTRE DE RECHERCHES ET D'ETUDES EUROPEEN, 92400 Courbevoie (FR)
(72) Inventeur: CABODI, Isabelle, 84300 Cavaillon (FR); VESPA, Pierrick, 13100 Aix-en-Provence (FR)
(74) Mandataire: Nony
(86) Numéro de dépôt international: PCT/EP2018/085976
(87) Numéro de publication internationale: WO 2019/122005

(56) Documents cités:
- DATABASE WPI Week 201037 12 mai 2010 (2010-05-12) Thomson Scientific, London, GB; AN 2010-F79510 XP002785382, -& CN 201 463 561 U (ZHENGZHOU XINGUANGSE REFRACTORY CO LTD) 12 mai 2010 (2010-05-12)

## Description

### Domaine technique

L'invention concerne une pièce à nez pour fours verriers et un four verrier comportant une telle pièce à nez.

### Etat de la technique

De nombreux produits verriers sont fabriqués par la fusion et l'affinage d'un mélange vitrifiable de matières premières comprenant des composés tels que des oxydes, des carbonates, des sulfates et des nitrates. Ces deux étapes sont réalisées dans des fours dont les principaux éléments constitutifs sont des produits réfractaires pouvant résister aux hautes températures ainsi qu'aux contraintes rencontrées dans ces fours. Les fours verriers comprennent ainsi généralement un très grand nombre de produits réfractaires, disposés à différents endroits selon leurs propriétés. Pour chaque partie du four, le produit choisi sera celui ne provoquant pas de défauts rendant le verre inutilisable (ce qui réduirait les rendements de production) et résistant suffisamment longtemps pour apporter au four une durée de vie satisfaisante.

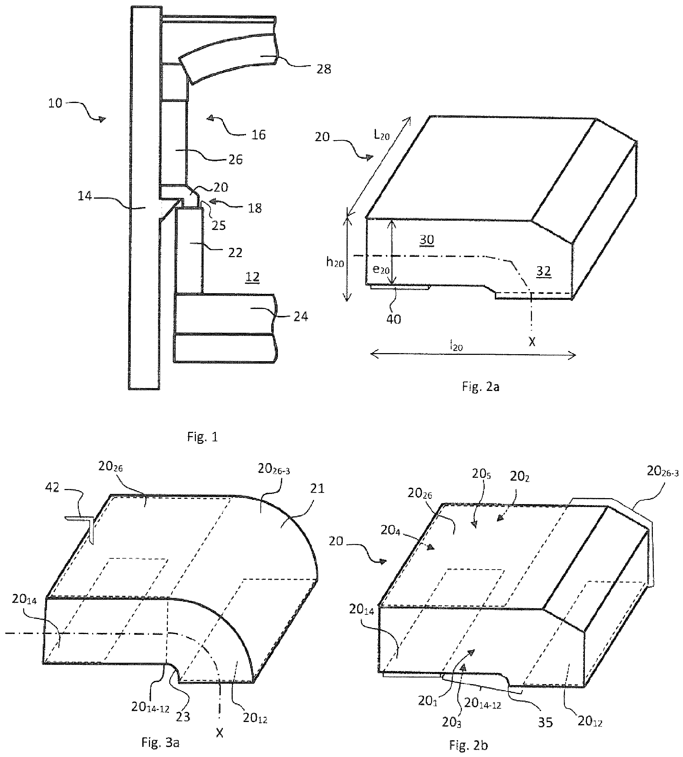

La figure 1 représente schématiquement une demi-coupe transversale d'un four verrier 10. On distingue en particulier une cuve 12, une structure métallique 14 et une superstructure 16.

La cuve 12, destinée à contenir le verre en fusion, comporte une paroi latérale 22 verticale et une sole 24. La paroi latérale 22 est classiquement constituée en blocs de cuve latéraux qui s'étendent sur toute la hauteur de la cuve, jusqu'à un bord supérieur 25.

La superstructure 16 comporte classiquement, à sa base, une strate intermédiaire 18 par laquelle elle repose sur la structure métallique, une paroi latérale 26 reposant sur la strate intermédiaire et une voûte 28. Des brûleurs, non représentés, sont disposés dans la paroi latérale 26 et fonctionnent en alternance.

La structure métallique 14, classiquement en fonte, entoure extérieurement la paroi latérale 22 de la cuve. Elle supporte le poids de la superstructure 16.

La strate intermédiaire 18 comporte, et de préférence est constituée, de pièces à nez 20 (« tuckstones » en anglais) qui, classiquement, présentent la forme représentée sur la figure 2a. Classiquement, chaque pièce à nez 20 présente la forme générale d'un profilé de section transversale en « L ». En service, la grande branche du L, ou « branche de superstructure » 30, s'étend horizontalement. La petite branche du L, ou « branche de cuve » 32, s'étend verticalement, sous la branche de superstructure 30.

La surface extérieure d'une pièce à nez 20 est constituée :
- de première et deuxième surfaces d'extrémité, 20₁ et 20₂ respectivement, délimitant la longueur L₂₀ du profilé,
- d'une surface inférieure 20₃ comportant une surface de pose 20₁₄ horizontale reposant, en service, sur la structure métallique 14, une surface de cuve 20₁₂, de préférence horizontale, s'étendant en service en regard du bord supérieur 25 de la cuve 12, et une surface de transition inférieure 20₁₄₋₁₂ reliant la surface de pose 20₁₄ et la surface de cuve 20₁₂,
- d'une surface latérale extérieure 20₄, de préférence verticale,
- d'une surface supérieure 20₅ comportant une surface de superstructure 20₂₆ horizontale sur laquelle, en service, la paroi latérale 26 repose, et une surface de transition supérieure 20₂₆₋₃ reliant la surface de superstructure 20₂₆ et la surface inférieure 20₃, et en particulier la surface de cuve 20₁₂.

Sur la figure 2b, les surfaces de cuve 20₁₂, de pose 20₁₄ et de superstructure 20₂₆ sont délimitées par un trait interrompu.

La pièce à nez 20 doit supporter des contraintes thermiques fortes puisque la branche de superstructure 30 est partiellement dans un environnement à des températures proches de la température ambiante généralement grâce à un refroidissement par soufflage d'air alors que la branche de cuve 32, partiellement à l'intérieur du four, est à des températures d'environ 1500°C.

Par ailleurs, la pièce à nez subit des cycles thermiques dus au fonctionnement en alternance des brûleurs et à des opérations de maintenance, telles que des opérations appelées « placage », qui nécessitent un arrêt puis une reprise du refroidissement externe du four, ou encore des opérations de changement de brûleurs ou de blocs brûleurs qui nécessitent un arrêt puis une reprise des brûleurs.

La pièce à nez doit également résister à la corrosion par les vapeurs agressives du four et les condensats.

Pour résister à ces contraintes, la pièce à nez est constituée en un produit réfractaire.

Parmi les produits réfractaires, on distingue les produits fondus et les produits frittés. A la différence des produits frittés, les produits fondus comportent le plus souvent une phase vitreuse intergranulaire reliant des grains cristallisés. Les problèmes posés par les produits frittés et par les produits fondus, et les solutions techniques adoptées pour les résoudre, sont donc généralement différents. Une composition mise au point pour fabriquer un produit fritté n'est donc pas *a priori* utilisable telle quelle pour fabriquer un produit fondu, et réciproquement. Les produits fondus, souvent appelés « électrofondus », sont obtenus par fusion d'un mélange de matières premières appropriées dans un four à arc électrique ou par toute autre technique adaptée à ces produits. Le bain de matière en fusion est ensuite coulé dans un moule, puis le produit obtenu subit un cycle de refroidissement contrôlé.

Actuellement, on utilise principalement des produits fondus pour constituer les pièces à nez, en particulier des produits de type Alumine-Zircone-Silice (AZS en abrégé) contenant de 30 à 45% de zircone. La microstructure de ces produits est sensiblement constituée de cristaux d'alumine-alpha, de cristaux de zircone libre, de cristaux d'eutectique corindon-zircone et d'une phase vitreuse intercristalline. On peut également trouver des produits à très haute teneur en zircone (typiquement plus de 85% de zircone). La microstructure de ces produits comprend essentiellement des cristaux de zircone libre (dendrites) et une phase vitreuse intercristalline. Par ailleurs, pour augmenter la durée de vie du four, l'assemblage des blocs réfractaires du four doit être « à sec », c'est-à-dire sans ciment de jointoiement. Pour que l'étanchéité soit assurée, les blocs doivent donc présenter des dimensions très précises, avec un bon état de surface. Les blocs, et en particulier les pièces à nez, sont donc toujours usinés pour assurer un contact étroit avec les blocs adjacents.

Cependant, la résistance à la fissuration des pièces à nez est parfois insuffisante pour répondre aux évolutions actuelles des besoins des verriers, qui demandent un allongement de la durée de vie des fours. En effet, la fissuration d'une pièce à nez peut entraîner une fracturation provoquant la chute de débris dans le bain de verre en fusion et générant ainsi des défauts dans le verre. En outre, la pièce à nez ne protège alors plus correctement la structure métallique et la cuve. Le reste de la superstructure peut également se trouver déséquilibré. CN201463561U divulgue une pièce à nez consistant en corindon de zirconium.

Il existe donc un besoin pour une pièce à nez présentant une meilleure résistance à la fissuration et/ou une durée de vie accrue. Un but de l'invention est de répondre à ce besoin.

L'invention concerne une pièce à nez fondue définissant une surface extérieure telle que décrite ci-dessus.

Suivant un premier aspect principal de l'invention, au moins une partie, de préférence toute la surface de transition inférieure présente une microstructure de peau, c'est-à-dire une densité de cristaux supérieure à 4 fois, voire supérieure à 6 fois, voire supérieure à 7 fois, voire supérieure à 9 fois la densité de cristaux mesurée à une profondeur de 4 centimètres (cm) sous ladite surface.

De manière surprenante, les inventeurs ont constaté que la présence d'une microstructure de peau à la surface de transition inférieure améliore considérablement la résistance thermomécanique ainsi que la résistance à la corrosion de la pièce à nez. La durée de vie du four en est avantageusement augmentée.

De préférence, au moins une partie, de préférence la totalité des surfaces destinées à être exposées à l'environnement à l'intérieur du four présente une microstructure de peau. En particulier, de préférence au moins une partie, de préférence toute la surface de cuve et/ou la surface de transition supérieure présente(nt) une microstructure de peau.

De préférence, au moins une partie, de préférence toute la surface de pose, voire toute la surface inférieure et/ou tout ou partie de la surface latérale extérieure présente(nt) une microstructure de peau.

Dans un mode de réalisation, la surface de superstructure et/ou les surfaces d'extrémité, voire toute la surface de la pièce à nez peuvent présenter une microstructure de peau.

Ce mode de réalisation n'est cependant pas préféré. De préférence, au moins la surface de superstructure ne présente pas une microstructure de peau. De préférence, les surfaces d'extrémité ne présentent pas une microstructure de peau.

Suivant un deuxième aspect principal de l'invention,
- la surface de transition supérieure comporte, à la jonction entre les branches de superstructure et de cuve, une surface courbe, c'est-à-dire non plane, dépourvue d'arête et, de préférence, constituant une fraction d'une surface cylindrique de base circulaire. De préférence, cette surface de jonction supérieure relie une surface horizontale de la branche de superstructure, en particulier la surface de superstructure, et une surface horizontale de la branche de cuve, en particulier la surface de cuve, et/ou
- la surface de transition inférieure comporte, à la jonction entre les branches de superstructure et de cuve, une surface courbe dépourvue d'arête et, de préférence, constituant une fraction d'une surface cylindrique de base circulaire. De préférence, cette surface de jonction inférieure relie une surface horizontale de la branche de superstructure, en particulier la surface de superstructure, et une surface horizontale de la branche de cuve, en particulier la surface de cuve.

Suivant un troisième aspect principal de l'invention, dans une section transversale quelconque, l'épaisseur de la pièce à nez est constante.

Les inventeurs ont constaté que l'absence d'arête et une épaisseur constante améliorent la résistance mécanique de la pièce à nez. La forme arrondie permet également un meilleur écoulement des condensats qui peuvent s'évacuer avec le verre en fusion dans la cuve, limitant ainsi la corrosion de la pièce à nez.

Suivant un quatrième aspect de l'invention, la surface de pose comporte un unique pied ou un ensemble de pieds, identiques ou différents les uns des autres, comportant chacun une face terminale, de préférence plane et coplanaire aux surfaces terminales des autres pieds, destinée à reposer, en service, sur la structure métallique.

De préférence, la surface de pose définit exactement trois ou quatre pieds.

De préférence, les faces terminales des pieds ne présentent pas une microstructure de peau.

De préférence encore, un matériau d'interfaçage remplit le volume délimité par la surface de pose et qui s'étend jusqu'au plan de la ou desdites surfaces terminales. Lorsque la surface de pose définit plusieurs pieds, le matériau d'interfaçage s'étend ainsi entre les pieds sur une épaisseur sensiblement égale à la hauteur des pieds.

L'aire de la face terminale du pied unique ou la somme cumulée des aires des faces terminales des pieds représente de préférence plus de 0,5% et moins de 10% de l'aire de la surface de pose.

Bien entendu, les différents aspects principaux de l'invention peuvent se combiner.

Quel que soit l'aspect principal, une pièce à nez selon l'invention peut encore comporter une ou plusieurs des caractéristiques optionnelles suivantes :
- la surface à microstructure de peau présente une densité de cristaux inférieure à 30 fois, voire inférieure à 25 fois, voire inférieure à 20 fois la densité de cristaux mesurée à une profondeur de 4 cm sous ladite surface ;
- au moins une partie de la surface de transition supérieure est une surface à microstructure de peau ;
- toute la surface inférieure est une surface à microstructure de peau ;
- au moins une partie de la surface de superstructure présente une densité de cristaux inférieure à quatre fois, à trois fois ou à deux fois la densité à une profondeur de 4 cm sous ladite surface de superstructure ;
- la surface à microstructure de peau, et en particulier au moins une partie de la surface de transition inférieure, présente une densité de cristaux supérieure à 130 cristaux par millimètre carré (mm²), de préférence supérieure à 150 cristaux par mm², de préférence supérieure à 180 cristaux par mm², de préférence supérieure à 200 cristaux par mm², supérieure à 230 cristaux par mm², voire supérieure à 250 cristaux par mm² ;
- la pièce à nez présente une teneur en ZrO₂, en pourcentage massique sur la base des oxydes, supérieure à 80,0%, et la surface à microstructure de peau, et en particulier au moins une partie de la surface de transition inférieure, présente une densité de cristaux supérieure à 600 cristaux par mm², de préférence supérieure à 650 cristaux par mm², de préférence supérieure à 700 cristaux par mm², de préférence supérieure à 800 cristaux par mm², supérieure à 900 cristaux par mm², supérieure à 1000 cristaux par mm², voire supérieure à 1100 cristaux par mm² ;
- la pièce à nez présente une teneur en ZrO₂, en pourcentage massique sur la base des oxydes, supérieure à 80,0%, et le diamètre équivalent moyen desdits cristaux de la surface à microstructure de peau, et en particulier d'au moins une partie de la surface de transition inférieure, est inférieur à 45 µm, de préférence inférieur à 40 µm, et/ou de préférence supérieur à 20 µm, ou supérieur à 30 µm;
- un matériau d'interfaçage, de préférence sous la forme d'une couche, de préférence un matériau isolant thermiquement présentant une conductivité thermique de préférence inférieure à 1,0 W.m⁻¹.K⁻¹, est disposé, de préférence collé, sur au moins une partie de la surface présentant une microstructure de peau ;
- le matériau d'interfaçage est un matériau déformable (sous l'effet des forces de compression subies en service), de préférence un feutre, de préférence un feutre isolant thermiquement présentant une conductivité thermique de préférence inférieure à 1,0 W.m⁻¹.K⁻¹, voire inférieure à 0,7 W.m⁻¹.K⁻¹, voire inférieure à 0,5 W.m⁻¹.K⁻¹, de préférence en fibres céramiques, notamment à base d'alumine et de silice ;
- les surfaces d'extrémité sont planes, et en particulier dépourvues de décrochement, et de préférence sensiblement verticales ;
- dans un autre mode de réalisation, les première et deuxième surfaces d'extrémité définissent respectivement un tenon et une mortaise de forme complémentaire au dit tenon, de manière que, dans la position de service, ledit tenon soit logé dans une mortaise d'une première pièce à nez adjacente et que ladite mortaise reçoive un tenon d'une deuxième pièce à nez adjacente (emboîtement mâle/femelle) ;
- la pièce à nez présente une composition chimique, en pourcentage massique sur la base des oxydes, telle que :

   Al₂O₃ + ZrO₂ + SiO₂ > 80,0% ;
- la pièce à nez présente une composition chimique comportant, en pourcentage massique sur la base des oxydes, plus de 0,5% et moins de 10,0% d'un stabilisant de la zircone ;
- la pièce à nez présente une composition chimique, en pourcentages massiques sur la base des oxydes, telle que, pour un total de 100% :
   - Al₂O₃ + ZrO₂ + SiO₂ : plus de 84,0% et moins de 97,0%,
   - Y₂O₃ : moins de 5,0%,
   - Na₂O : plus de 0,1% et moins de 1,5%,
   - B₂O₃ : plus de 0,1% et moins de 0,6%,
   - espèces oxydes autres que Al₂O₃, ZrO₂, SiO₂, Y₂O₃, Na₂O et B₂O₃ : moins de 10,0% ;
- la pièce à nez présente une composition chimique, en pourcentages massiques sur la base des oxydes, telle que:
   - ZrO₂ : plus de 12,0% et moins de 45,0%,
   - SiO₂ : plus de 8,0% et moins de 24,0%,
   - Al₂O₃ : plus de 35,0% et moins de 60,0%,
      ou telle que
   - ZrO₂ : plus de 80,0% et moins de 97,0%,
   - SiO₂ : plus de 0,5% et moins de 15,0%,
   - Al₂O₃ : plus de 0,2% et moins de 3,0%.

L'obtention d'une microstructure de peau à la surface d'une pièce à nez fondue, c'est-à-dire en un produit fondu, ne pose pas de difficulté particulière à l'homme de l'art. En particulier, l'homme de l'art sait qu'une microstructure peut être rendue plus fine en surface en augmentant la vitesse de solidification de la matière en fusion.

Lorsque le bain de matière en fusion est coulé dans le moule, les propriétés du moule et la température du moule peuvent notamment être adaptées pour assurer un refroidissement suffisamment rapide pour obtenir une microstructure de peau. Par exemple, lorsque le moule est initialement à température ambiante, il se forme une microstructure de peau à la surface en contact ou à proximité des parois du moule. Si, contrairement à la pratique constante, cette peau n'est pas éliminée lors d'une opération d'usinage, on obtient ainsi une microstructure de peau sur les surfaces de la pièce à nez qui n'ont pas été usinées.

Un usinage limité (surfaçage) permet cependant de conserver une microstructure de peau.

L'invention concerne, dans un mode de réalisation particulier, un procédé de fabrication d'une pièce à nez, le procédé comprenant les étapes successives suivantes :
a) mélange de matières premières de manière à former une charge de départ ;
b) fusion de ladite charge de départ jusqu'à obtention d'un bain de matière en fusion ;
c) coulage de ladite matière en fusion dans un moule, de préférence à température ambiante, et solidification de ladite matière en fusion par refroidissement, de manière à obtenir une pièce intermédiaire présentant la forme générale d'une pièce à nez et dont la surface en contact avec le moule présente une microstructure de peau ;
d) démoulage de la pièce intermédiaire, puis
e) usinage partiel de la surface extérieure de la pièce intermédiaire, de manière à conserver au moins une partie de la surface présentant une microstructure de peau.

De préférence, la surface de superstructure, voire les surfaces d'extrémité sont usinées, ce qui confère une bonne stabilité au four. Dans un mode de réalisation, la surface de pose n'est pas usinée, et/ou la surface de cuve n'est pas usinée.

L'invention concerne également une pièce à nez fabriquée ou susceptible d'avoir été fabriquée par un procédé selon l'invention.

L'invention concerne encore un procédé de fabrication d'un four comportant une cuve de fusion de verre, une superstructure s'étendant au-dessus de la cuve, et une structure métallique supportant la superstructure, ledit procédé comportant l'intégration d'une pièce à nez selon l'invention, de préférence fabriquée suivant les étapes a) à d), de préférence suivant les étapes a) à e), dans une strate intermédiaire entre la structure métallique et une paroi latérale de la superstructure, les surfaces de pose et de superstructure étant respectivement en contact avec la structure métallique et la paroi latérale de la superstructure, et la surface de cuve étant en regard d'un bord supérieur de la cuve.

L'invention concerne enfin un four verrier comportant :
- une cuve comportant un bord supérieur ;
- une structure métallique ; et
- une superstructure comportant une strate intermédiaire comportant une pièce à nez selon l'invention, la surface de pose reposant sur la structure métallique, la surface de cuve s'étendant en regard du bord supérieur de la cuve, et la superstructure reposant sur la surface de superstructure.

### Définitions

Un plan transversal est un plan perpendiculaire à la direction de la longueur. Le plan transversal médian est le plan transversal passant à mi-longueur.

« Inférieur » et « supérieur », « intérieur » et « extérieur », « horizontal » et « vertical », font référence à des orientations ou à des positions lorsque la pièce à nez est dans sa position de service, dans un four verrier.

Par « horizontal » et « vertical », on entend une orientation formant avec un plan parfaitement horizontal et vertical, respectivement, un angle inférieur à 5°, voire inférieur à 2°, voire inférieur à 1°.

La « densité de cristaux » est déterminée par comptage des cristaux visibles sur un cliché obtenu par microscopie de la surface considérée, après polissage de ladite surface avec une grille diamantée jusqu'au grade 1 micron. Chaque cristal est délimité par la phase vitreuse. Seuls les cristaux présentant une surface supérieure à 12 microns carrés sont comptabilisés. Pour vérifier si une surface d'une pièce à nez présente une microstructure de peau, on compte les cristaux visibles sur un cliché de cette surface après l'avoir polie, puis on découpe la pièce à nez à une profondeur de 4 cm sous cette surface et on compte les cristaux visibles sur un cliché de la surface ainsi exposée, après l'avoir polie.

Par « peau », on entend classiquement la région périphérique d'un bloc fondu, constituée à partir de la matière en fusion qui était à moins de 5 millimètres (mm) de la paroi du moule lors de sa solidification.

Si une pièce « supporte », « repose sur » ou « est en contact avec » une autre pièce, ces deux pièces sont en appui l'une sur l'autre. Le contact entre ces pièces peut être direct ou indirect. Par « contact indirect », on entend que les deux pièces sont séparées par un élément intermédiaire, de préférence un matériau d'interfaçage sous l'effet de cet appui, par exemple un feutre.

La surface de cuve est la surface qui, dans la position de service, est « en regard » du bord supérieur de la cuve, c'est-à-dire qu'elle s'étend sensiblement parallèlement à ce bord, au-dessus et à proximité immédiate de ce bord. La surface de cuve est ainsi définie par l'ensemble des points de la surface extérieure qui sont à la distance minimale du bord de la cuve. La surface de cuve, de préférence horizontale, ne s'étend donc pas, vers l'extérieur de la cuve, au-delà du décrochement 35, à la jonction entre les branches de cuve et de superstructure. Le décrochement 35 peut en particulier définir une arête à angle droit.

Par « usinage », on entend une opération de rectification par laquelle la surface d'une pièce réfractaire est usinée afin d'obtenir une géométrie de surface précise. Classiquement, et dans un mode de réalisation particulier de l'invention, l'usinage conduit à retirer au moins la peau.

Dans un souci de clarté, on utilise les formules chimiques des oxydes pour désigner les teneurs de ces oxydes dans une composition. Par exemple, « ZrO₂ », « SiO₂ » ou « Al₂O₃ » désignent les teneurs de ces oxydes et « zircone », « silice » et « alumine » sont utilisés pour désigner des phases de ces oxydes constituées de ZrO₂, SiO₂ et Al₂O₃, respectivement.

Sauf mention contraire, toutes les teneurs en oxydes dans une pièce à nez selon l'invention sont des pourcentages massiques sur la base des oxydes. Une teneur massique d'un oxyde d'un élément métallique se rapporte à la teneur totale de cet élément exprimée sous la forme de l'oxyde le plus stable, selon la convention habituelle de l'industrie.

Dans un produit fondu, les oxydes représentent classiquement plus de 95%, plus de 97%, plus de 99%, de préférence sensiblement 100% de la masse.

HfO₂ n'est pas chimiquement dissociable de ZrO₂. Cependant, selon la présente invention, HfO₂ n'est pas ajouté volontairement. HfO₂ ne désigne donc que les traces d'oxyde d'hafnium, cet oxyde étant toujours naturellement présent dans les sources de zircone à des teneurs massiques généralement inférieures à 5%, généralement inférieures à 2%. Dans une pièce à nez selon l'invention, la teneur massique en HfO₂ est de préférence inférieure à 5%, de préférence inférieure à 3%, de préférence inférieure à 2%. Par souci de clarté, on peut désigner indifféremment la teneur totale en oxyde de zirconium et en traces d'oxyde d'hafnium par « ZrO₂ » ou par « ZrO₂ + HfO₂ ». HfO₂ n'est donc pas compris dans les " espèces oxydes autres que ZrO₂, SiO₂, Al₂O₃, Na₂O, B₂O₃ et Y₂O₃ ".

### Brève description des figures

D'autres caractéristiques et avantages de l'invention apparaîtront encore à la lecture de la description détaillée qui va suivre et à l'examen du dessin annexé dans lequel :
- la figure 1 représente schématiquement une demi-coupe d'un four verrier ;
- la figure 2 (2a, 2b, 2c et 2d) est une vue schématique, en perspective, d'un exemple de pièce à nez selon l'invention. La forme représentée est également la forme classique des pièces à nez conventionnelles ;
- la figure 3 (3a et 3b) est une vue schématique, en perspective, d'un exemple de pièce à nez de four de verrerie dans un mode de réalisation de l'invention préféré.

### Description détaillée

La figure 1 ayant été décrite en préambule, on se reporte à présent à la figure 2a, partiellement décrite en préambule.

La longueur L₂₀ de la pièce à nez 20 est de préférence supérieure à 10 cm et de préférence inférieure à 100 cm. Sa largeur l₂₀ est de préférence supérieure à 30 cm et/ou inférieure à 100 cm et sa hauteur h₂₀ est de préférence supérieure à 10 cm et/ou inférieure à 50 cm.

Dans un plan de coupe transversal, c'est-à-dire perpendiculaire à la direction de la longueur L₂₀, on appelle « axe X » la ligne qui s'étend à mi-distance des surfaces supérieure 20₅ et inférieure 20₃.

L'épaisseur e₂₀ de la brique de nez est, en un point de l'axe X contenu dans le plan transversal médian la plus petite dimension mesurée perpendiculairement à l'axe X en ce point. De préférence, l'épaisseur moyenne de la brique à nez le long de l'axe X est supérieure à 10 cm et/ou inférieure à 50 cm. De préférence, cette épaisseur est constante le long de l'axe X.

De préférence, la pièce à nez est un profilé, de sorte que ses dimensions dans un plan transversal sont indépendantes du plan de coupe transversal considéré.

De préférence, la surface de pose 20₁₄ présente une microstructure de peau. Dans un mode de réalisation préféré, toute la surface inférieure 20₃, et/ou tout ou partie de la surface de transition supérieure 20₂₆₋₃, de préférence au moins la partie non horizontale de la surface de transition supérieure 20₂₆₋₃, et/ou la surface latérale extérieure 20₄ de la pièce à nez présente(nt) une microstructure de peau. La résistance à la fissuration ainsi que le temps d'usinage se trouvent ainsi améliorés.

Lorsque la microstructure de peau est obtenue par le refroidissement rapide résultant de la mise en contact avec la surface d'un moule, la surface de la pièce à nez qui présente cette microstructure peut présenter des variations géométriques préjudiciables pour l'assemblage à sec de la pièce à nez 20 avec la paroi latérale 26 de la superstructure ou avec la structure métallique.

Dans un mode de réalisation, un matériau d'interfaçage 40 est disposé contre au moins une partie de la surface à microstructure de peau. Le matériau d'interfaçage 40 est configuré pour accommoder deux surfaces destinées à être en contact l'une avec l'autre et/ou à les isoler thermiquement l'une de l'autre.

Le matériau d'interfaçage peut être un matériau déformable pour compenser les variations géométriques de ces surfaces.

Le matériau d'interfaçage peut être un matériau isolant thermiquement présentant une conductivité thermique de préférence inférieure à 1,0 W.m⁻¹.K⁻¹, voire inférieure à 0,7 W.m⁻¹.K⁻¹, voire inférieure à 0,5 W.m⁻¹.K⁻¹.

Le matériau d'interfaçage est de préférence un feutre, de préférence un feutre isolant thermiquement, de préférence en fibres céramiques, en particulier à base d'alumine et de silice.

Le matériau d'interfaçage peut être disposé sur tout ou partie des surfaces qui présentent une microstructure de peau, et en particulier sur des surfaces en contact qui, en l'absence du matériau déformable, seraient directement en contact avec une autre pièce.

Le matériau d'interfaçage, isolant thermiquement et/ou déformable, se présente de préférence sous la forme d'une couche dont l'épaisseur est de préférence inférieure à 40 mm, de préférence inférieure à 32 mm, de préférence inférieure à 28 mm, de préférence inférieure à 22 mm ou/ou de préférence supérieure à 3 mm, voire supérieure à 5 mm.

De préférence encore, le matériau d'interfaçage est fixé sur la surface à microstructure de peau, de préférence par collage. Sur la figure 2a, il est collé sur la surface de pose qui présente une microstructure de peau. Le matériau d'interfaçage permet avantageusement de stabiliser l'assemblage des deux pièces qu'il sépare, en dépit d'éventuelles variations dimensionnelles résultant de l'absence d'usinage.

Dans un mode de réalisation, la surface à microstructure de peau est localement structurée afin d'améliorer la fixation du matériau d'interfaçage 40, en particulier s'il s'agit d'un matériau déformable. Par exemple, une ou plusieurs rainures circulaires, fermées sur elles-mêmes, peuvent être ménagées afin de créer une ou plusieurs zones d'accrochage.

Dans un mode de réalisation, le matériau d'interfaçage s'étend sur toute la surface inférieure.

De préférence, le matériau d'interfaçage ne s'étend pas sur les surfaces qui ne présentent pas une microstructure de peau.

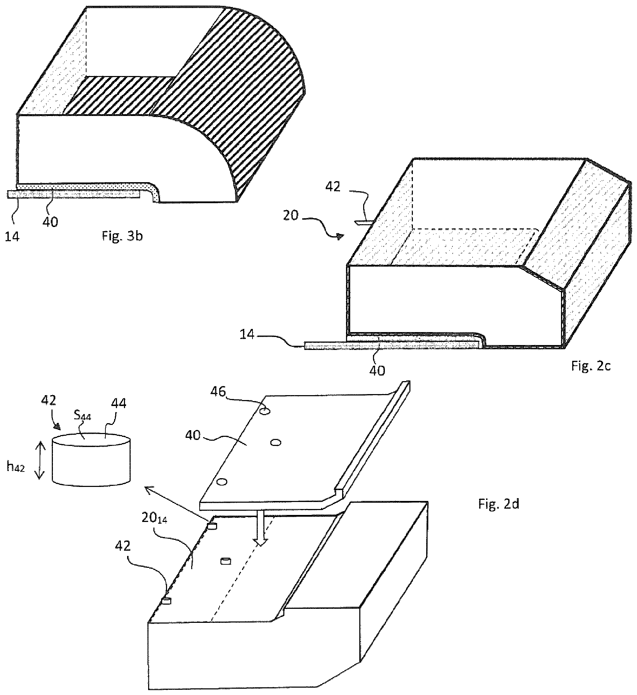

Dans un mode de réalisation préféré illustré sur la figure 2c ou 3b,
- toute la surface inférieure 20₃ (surface de pose 20₁₄, surface de cuve 20₁₂, et surface de transition inférieure 20₁₄₋₁₂ reliant la surface de pose 20₁₄ et la surface de cuve 20₁₂),
- toute la surface latérale extérieure 20₄, ainsi que
- la partie de la surface de transition supérieure 20₂₆₋₃ qui n'est pas horizontale
présentent une microstructure de peau (surface hachurée des figures 2c et 3b). Le matériau d'interfaçage s'étend, de préférence exclusivement, sur toute la surface de pose 20₁₄ ainsi que sur la partie de la surface de transition inférieure 20₁₄₋₁₂ qui n'est pas horizontale (figures 2c et 3b).

Dans un mode de réalisation illustré sur la figure 2d, la surface de pose 20₁₄, c'est-à-dire la face qui s'étend en regard de la structure métallique dans la position de service, comporte un ou plusieurs, de préférence deux à quatre pieds 42, dont les faces terminales 44 sont planes et coplanaires. La hauteur h₄₂ des pieds est de préférence supérieure à 1 mm, de préférence supérieure à 2 mm, et/ou inférieure à 2 cm, de préférence inférieure à 1 cm, de préférence inférieure à 8 mm, de préférence inférieure à 5 mm.

Les faces terminales des pieds définissent les surfaces par lesquelles la pièce à nez prend appui sur la structure métallique. Leur usinage permet de poser la pièce à nez en accommodant parfaitement les surfaces, ce qui permet un positionnement précis de la pièce à nez.

Dans un mode de réalisation préféré, les faces terminales des pieds ne présentent pas une microstructure de peau. Le reste de la surface de pose 20₁₄ et/ou le reste de la surface des pieds peut cependant présenter une microstructure de peau.

De préférence, un matériau d'interfaçage 40 comble, dans la position de service, l'espace entre la pièce à nez et la structure métallique. Autrement dit, le matériau d'interfaçage 40 s'étend entre les pieds. Il peut présenter la forme d'une couche, par exemple d'un mat non tissé, percé de trous 46 ajustés à la forme des pieds. Avantageusement, les pieds participent ainsi au maintien en position du matériau d'interfaçage 40.

Dans un mode de réalisation, la surface de pose 20₁₄ n'est pas usinée, à l'exception des faces terminales 44. L'opération d'usinage en est avantageusement considérablement accélérée.

La somme totale des aires S₄₄ des faces terminales des pieds, ou l'aire de la face terminale du pied lorsque la surface de pose ne définit qu'un seul pied, représente de préférence plus de 0,5%, de préférence plus de 1%, plus de 2%, et/ou moins de 10%, de préférence moins de 8%, de préférence moins de 5% de l'aire de la surface de pose 20₁₄. Dans un mode de réalisation, chaque face terminale présente une surface inférieure à 10 cm², inférieure à 5 cm², inférieure à 3 cm².

De préférence, les pieds ne sont pas alignés, ce qui améliore la stabilité de la pièce à nez.

La forme des pieds n'est pas limitative. En particulier, ils peuvent être cylindriques, de préférence de base circulaire, comme représenté, mais aussi coniques ou parallélépipédiques. Les pieds ne présentent pas nécessairement tous la même forme.

Dans un mode de réalisation, au moins un, voire chaque pied s'étend selon toute la longueur de la pièce à nez.

De préférence, la forme des pieds ne présente pas de région en contre-dépouille.

Dans un mode de réalisation, on utilise un moule dont la géométrie est déterminée avec précision, par exemple un moule réalisé par impression en trois dimensions.

De préférence, la pièce à nez selon l'invention comporte, de préférence est constituée en un matériau électrofondu constitué, pour plus de 80% de sa masse, d'alumine, de zircone, de silice et éventuellement d'un stabilisant de la zircone, en particulier d'oxyde d'yttrium. Le matériau peut être de type AZS ou bien à très haute teneur en zircone (comportant typiquement plus de 80% de ZrO₂ en pourcentage massique).

Dans un mode de réalisation, la pièce à nez selon l'invention comporte plus de 0,5%, plus de 1,5%, plus de 3,0%, plus de 4,0%, plus de 5,0%, voire plus de 6,0%, et/ou moins de 10,0%, moins de 9,0%, voire moins de 8,0% de stabilisant de la zircone, en particulier CaO et/ou Y₂O₃ et/ou MgO et/ou CeO₂, de préférence Y₂O₃ et/ou CaO, de préférence Y₂O₃.

De préférence, la pièce à nez selon l'invention présente une composition chimique, en pourcentages massiques sur la base des oxydes, telle que, pour un total de 100%,
- Al₂O₃ + ZrO₂ + SiO₂ : plus de 80,0%, de préférence plus de 84,0%, de préférence plus de 86,0%, et/ou moins de 97,0%, voire moins de 95,0%, voire moins de 94,0%, et/ou
- Y₂O₃ : plus de 0,5%, plus de 1,5%, plus de 2,0% et/ou moins de 5,0%, moins de 4,0%, voire moins de 3,0%, et/ou
- Na₂O : plus de 0,1%, voire plus de 0,2%, et/ou moins de 0,6%, de préférence moins de 0,5%, voire moins de 0,4%, et/ou
- B₂O₃ : plus de 0,1%, voire plus de 0,2%, et/ou moins de 0,6%, de préférence moins de 0,5%, voire moins de 0,4%, et/ou
- espèces oxydes autres que Al₂O₃, ZrO₂, SiO₂, Y₂O₃, Na₂O et B₂O₃ : moins de 10,0%, de préférence moins de 9,0%, de préférence encore moins de 8,0%, moins de 5,0%, voire moins de 3,0%, ou moins de 2,0%, ou moins de 1,0%, ou moins de 0,5%.

Selon un mode de réalisation, la pièce à nez selon l'invention présente une composition chimique telle que :
- ZrO₂ : plus de 12,0%, de préférence plus de 15,0%, de préférence plus de 18,0%, voire plus de 22,0%, et/ou moins de 45,0%, voire moins de 40,0%, voire moins de 35,0%, voire moins de 30,0%, voire moins de 25,0%, et/ou
- SiO₂ : plus de 8,0%, de préférence plus de 10,0%, de préférence plus de 12,0%, et/ou moins de 24,0%, voire moins de 20,0%, moins de 17,0%, voire moins de 14,0%, et/ou
- Al₂O₃ : plus de 35,0%, de préférence plus de 38,0%, voire plus de 40,0%, et/ou moins de 60,0%, de préférence moins de 55,0%, voire moins de 50,0%, moins de 46,0%, voire moins de 44,0%.

Selon un mode de réalisation, la pièce à nez selon l'invention présente une composition chimique telle que :
- ZrO₂ : plus de 80,0%, de préférence plus de 83,0%, de préférence plus de 86,0%, et/ou moins de 97,0%, voire moins de 95,0%, voire moins de 94,0%, et/ou
- SiO₂ : plus de 0,5%, de préférence plus de 1,5%, de préférence plus de 2,5%, de préférence plus de 4,0%, voire plus de 6,0%, plus de 8,0%, plus de 8,5%, et/ou moins de 15,0%, voire moins de 12,0%, moins de 10,0%, voire moins de 8,0%, et/ou
- Al₂O₃ : plus de 0,2%, de préférence plus de 1,0%, et/ou moins de 3,0%, de préférence moins de 2,0%.

Selon un mode de réalisation, la pièce à nez est pourvue d'un dispositif d'ancrage 42 dans l'enveloppe métallique du four de verrerie. Ce dispositif d'ancrage est par exemple constitué d'une vis, d'un crochet, d'une plaque métallique, ou d'une encoche. Ce dispositif d'ancrage est de préférence fixé à moins de 20 cm, de préférence moins de 10 cm, de préférence moins de 5 cm de la surface de superstructure (figure 2c), voire fixé sur la surface de superstructure (figure 3a).

Bien entendu, les dimensions et les formes décrites ci-dessus ne sont pas limitatives.

La figure 3 représente une vue schématique, en perspective, d'une forme préférée de pièce à nez selon l'invention.

La surface de transition supérieure 20₂₆₋₃ définit, dans la partie de jonction entre les branches de superstructure et de cuve, une surface de jonction supérieure 21 dépourvue d'arête qui, de préférence, constitue une fraction d'un cylindre de base circulaire qui, de préférence, comme représenté, s'étend angulairement sur 90° (quart d'un tronc de cylindre) et, de préférence, relie deux surfaces horizontales respectives de ces branches.

De préférence, la surface de transition inférieure 20₁₄₋₁₂ définit, dans la partie de jonction entre les branches de superstructure et de cuve, une surface de jonction inférieure 23 dépourvue d'arête et qui, de préférence, comporte, voire constitue une fraction d'un cylindre de base circulaire qui, de préférence, comme représenté, s'étend angulairement sur 90°, de préférence en reliant deux surfaces horizontales respectives de ces branches. Dans un mode de réalisation, cette fraction cylindrique est sensiblement coaxiale à la fraction cylindrique de la surface de transition supérieure.

L'utilisation de l'impression tridimensionnelle pour réaliser le moule permet de réaliser plus facilement des surfaces dépourvues d'arêtes, et en particulier la surface de transition supérieure et/ou la surface de transition inférieure, et notamment des fractions cylindriques de ces surfaces de transition. La résistance mécanique de la pièce à nez en est améliorée.

Dans un mode de réalisation préféré, comme représenté sur la figure 3, l'épaisseur de la pièce à nez est constante le long de l'axe X.

### Exemples

Pour reproduire les sollicitations subies par les pièces à nez en service, des échantillons de dimensions 150x100x85 mm³ sont disposés dans un four, une première grande face dite « face chaude » étant à proximité des moyens de chauffage et la deuxième grande face, opposée, dite « face froide » étant contre la porte du four lorsque celle-ci est fermée.

La température des moyens de chauffage est augmentée à la vitesse de 30°C par heure jusqu'à atteindre 1350°C sur la face chaude. Cette température est maintenue pendant toute la durée de l'essai.

La porte du four est ensuite ouverte de manière périodique pour faire varier la température de la face froide entre 600°C et 1000°C sur 3 cycles de 3 heures (porte ouverte pendant 1,5 heure, porte fermée pendant 1,5 heure), puis la température est maintenue à 600°C pendant 15 heures. Ce traitement est reproduit pendant 5 jours consécutifs.

On évalue la performance des échantillons en mesurant le module de Young dynamique, appelé « MOE », avant et après essai. Le MOE est déterminé par mesure de la vitesse de propagation d'ultrasons dans l'échantillon avec un appareil Ultrasonic Tester IP8 de la société Ultratest utilisé en mode plan. Le MOE initial, mesuré à 20°C, est noté « MOE ini », le MOE résiduel après essai est noté « MOE res » et la perte de MOE (« MOE res » - « MOE ini ») / « MOE initial » est notée « ΔMOE » dans le tableau 1.

L'analyse et la caractérisation des microstructures des produits peuvent être effectuées à l'aide d'un microscope optique de type Richert Polyvar 2, de préférence en utilisant un grossissement x5, couplée avec un logiciel d'analyse d'images ImageJ. Le logiciel d'analyse d'images permet d'isoler les cristaux indépendants (c'est-à-dire entourés de phase vitreuse) et d'en déterminer la surface. On peut notamment distinguer les cristaux de zircone libre ou d'eutectique alumine-zircone. On ne retient que les cristaux dont la surface est supérieure à 12 microns carrés.

On évalue le nombre de cristaux (Nc) par mm² de surface de la face froide (Nc-surface) ainsi que sur une surface située à 4 cm à l'intérieur de l'échantillon (Nc-interne). Les valeurs données correspondent à des moyennes sur 4 prélèvements. On calcule le rapport entre Ne-surface et Nc-interne. Un rapport supérieur à 4, voire supérieur à 7 est représentatif d'une microstructure de peau.

L'échantillon n°1 est un échantillon de référence usiné sur toutes ses faces et constitué de matériau AZS ER1681 commercialisé par la société SEFPRO.

L'échantillon n°2 est un échantillon de référence usiné sur toutes ses faces et constitué de matériau ER1195 commercialisé par la société SEFPRO.

L'échantillon n° 3 est un échantillon usiné sur toutes ses faces à l'exception de la face froide, et constitué de matériau ER1195 commercialisé par la société SEFPRO.

L'échantillon n°4 est un échantillon de référence usiné sur toutes ses faces à l'exception de la face froide, et constitué de matériau ER1681 commercialisé par la société SEFPRO.

Pour mesurer la résistance à la corrosion, des barreaux cylindriques de 22 mm de diamètre et de 100 mm de hauteur ont été prélevés dans les échantillons et soumis à un test consistant à faire tourner les barreaux immergés dans un bain de verre sodocalcique. La vitesse de rotation des échantillons était de 6 tours par minute. Pour les exemples 2 et 3, le verre a été porté à 1550°C et le test a duré 72 heures. Pour l'exemple 4, le verre a été porté à 1500°C et le test a duré 48 heures. A la fin du test, on a évalué le volume restant de l'échantillon corrodé pour chaque barreau. Le volume restant du produit de référence (exemple 1 présent dans chaque test) est choisi comme base de comparaison. Le rapport du volume restant de tout autre barreau corrodé au volume restant du barreau de référence corrodé, multiplié par 100 correspond à l'indice de corrosion (le) et donne une évaluation de la résistance à la corrosion de l'échantillon testé par rapport à celle du produit de référence. Ainsi, les évaluations supérieures à 100 représentent une moindre perte par corrosion que celle du produit de référence. Les produits en question présentent donc une meilleure résistance à la corrosion par le verre en fusion que l'échantillon de référence.

On évalue par ailleurs la résistance thermomécanique des échantillons en température, à 500°C, avec le rapport MOR/MOE. La force à la rupture (MOR) et le MOE sont alors mesurés sur un échantillon de dimensions 15 x 25 x 150 cm³. Le montage en flexion 3 points est réalisé selon la norme ISO NF EN 843 avec une presse Shimadzu, avec une distance de 125 mm entre les deux appuis inférieurs. Des caoutchoucs sont placés sur les poinçons afin d'éviter une initiation de fissures. La vitesse de descente du poinçon est constante, et de 5 mm par minute.

Les résultats sont donnés dans le tableau 1 :

| | 1 | 2 | 3 | 4 |
|---|---|---|---|---|
| Nc-surface (pour 1 mm²) | 30 | 77 | 1135 | 229 |
| Ne-interne (pour 1 mm²) | 29 | 43 | 65 | 29 |
| Nc-surface / Nc-interne (pour 1 mm²) | 1,0 | 1,8 | 17,5 | 7,9 |
| MOE ini (GPa) | 147 | 196 | 182 | ND |
| MOE res (GPa) | 57 | 122 | 148 | ND |
| ΔMOE (%) | 61 | 38 | 19 | ND |
| Ic | 100 | 158 | 179 | 118 |
| MOR/MOE @ 500°C | 0,48x10⁻³ | 0,58x10⁻³ | 0,72x10⁻³ | 0,77x10⁻³ |

Les exemples montrent qu'une microstructure de peau (gradient élevé de la densité de cristaux à la périphérie du produit) conduit à une amélioration remarquable de la stabilité du produit, le ΔMOE pouvant être divisé par plus de 3.

L'augmentation du rapport MOR/MOE témoigne de l'excellente résistance thermomécanique d'une pièce à nez selon l'invention.

Il va de soi que les modes de réalisation décrits ne sont que des exemples et l'on pourrait les modifier, notamment par substitution d'équivalents techniques, sans sortir pour cela du cadre de l'invention.

## Revendications

1. Pièce à nez fondue définissant
- une surface inférieure (20₃) comportant :
- une surface de pose (20₁₄) destinée à reposer sur la structure métallique (14) d'un four verrier,
- une surface de cuve (20₁₂) destinée à faire face à un bord supérieur (25) d'une cuve (12) dudit four verrier,
- une surface de transition inférieure (20₁₄₋₁₂) reliant la surface de pose et la surface de cuve,
- une surface supérieure (20₅) comportant :
- une surface de superstructure (20₂₆) destinée à recevoir une paroi latérale (26) d'une superstructure (16) dudit four verrier,
- une surface de transition supérieure (20₂₆₋₃) reliant la surface de superstructure (20₂₆) et la surface inférieure (20₃),
**caractérisée en ce qu'**au moins une partie de la surface de transition inférieure présente une densité de cristaux supérieure à quatre fois la densité de cristaux à une profondeur de 4 centimètres sous ladite surface de transition inférieure, une telle surface étant qualifiée de surface « à microstructure de peau », une densité de cristaux étant évaluée par le nombre de cristaux présentant une aire supérieure à 12 µm² par mm² de surface après polissage, la densité de cristaux à ladite profondeur étant évaluée sur la surface exposée après une coupe de la pièce à nez à ladite profondeur.

2. Pièce à nez selon la revendication précédente, dans laquelle au moins une partie de la surface de transition supérieure est une surface à microstructure de peau.

3. Pièce à nez selon l'une quelconque des revendications précédentes, dans laquelle toute la surface inférieure est une surface à microstructure de peau.

4. Pièce à nez selon l'une quelconque des revendications précédentes, dans laquelle au moins une partie de la surface de superstructure présente une densité de cristaux inférieure à quatre fois la densité à une profondeur de 4 centimètres sous ladite surface de superstructure.

5. Pièce à nez selon l'une quelconque des revendications précédentes, dans laquelle une couche en un matériau d'interfaçage (40) déformable et/ou présentant une conductivité thermique inférieure à 1,0 W.m⁻¹.K⁻¹ est disposée sur au moins une partie d'une surface à microstructure de peau.

6. Pièce à nez selon l'une quelconque des revendications précédentes, présentant une composition chimique, en pourcentage massique sur la base des oxydes, telle que :
Al₂O₃ + ZrO₂ + SiO₂ > 80,0%.

7. Pièce à nez selon l'une quelconque des revendications précédentes, comportant, en pourcentage massique sur la base des oxydes, plus de 0,5% et moins de 10,0% d'un stabilisant de la zircone.

8. Pièce à nez selon l'une quelconque des revendications précédentes, présentant une composition chimique, en pourcentage massique sur la base des oxydes, telle que, pour un total de 100% :
- Al₂O₃ + ZrO₂ + SiO₂ : plus de 83,8% et moins de 97,0%,
- Y₂O₃ : plus de 0,5% et moins de 5,0%,
- Na₂O : plus de 0,1% et moins de 0,6%,
- B₂O₃ : plus de 0,1% et moins de 0,6%,
- espèces oxydes autres que Al₂O₃, ZrO₂, SiO₂, Y₂O₃, Na₂O et B₂O₃ : moins de 10,0%.

9. Pièce à nez selon l'une quelconque des revendications précédentes, présentant une composition chimique, en pourcentage massique sur la base des oxydes, telle que:
- ZrO₂ : plus de 12,0% et moins de 45,0%,
- SiO₂ : plus de 8,0% et moins de 24,0%,
- Al₂O₃ : plus de 35,0% et moins de 60,0%.

10. Pièce à nez selon l'une des revendications 1-8, présentant une composition chimique, en pourcentage massique sur la base des oxydes, telle que
- ZrO₂ : plus de 80,0% et moins de 97,0%,
- SiO₂ : plus de 0,5% et moins de 15,0%,
- Al₂O₃ : plus de 0,2% et moins de 3,0%.

11. Pièce à nez selon la revendication précédente, dans laquelle ladite au moins une partie de la surface de transition inférieure présente une densité de cristaux supérieure à 650 cristaux par mm².

12. Pièce à nez selon l'une quelconque des revendications 10 ou 11, dans laquelle le diamètre équivalent moyen des cristaux de ladite au moins une partie de la surface de transition inférieure est inférieur à 45 µm.

13. Pièce à nez selon l'une quelconque des revendications précédentes, dans laquelle la surface de pose définit un pied unique ou un ensemble de pieds, chaque pied présentant une face terminale (44) destinée à reposer, en service, sur la structure métallique, ladite face terminale ne présentant pas une microstructure de peau.

14. Pièce à nez selon la revendication immédiatement précédente, dans laquelle l'aire de la face terminale du pied unique ou la somme cumulée des aires (S₄₄) des faces terminales des pieds représente plus de 0,5% et moins de 10% de l'aire de la surface de pose.

15. Pièce à nez selon l'une quelconque des deux revendications immédiatement précédentes, la revendication 5 s'appliquant, dans laquelle le matériau d'interfaçage remplit le volume délimité par la surface de pose et qui s'étend jusqu'au plan de la ou desdites surfaces terminales.

16. Pièce à nez selon l'une quelconque des revendications précédentes, dans laquelle
- la surface de transition supérieure comporte, à la jonction entre des branches de superstructure et de cuve, une surface de jonction supérieure (21) courbe dépourvue d'arête et reliant une surface horizontale de la branche de superstructure et une surface horizontale de la branche de cuve, et/ou
- la surface de transition inférieure comporte, à la jonction entre les branches de superstructure et de cuve, une surface de jonction inférieure (23) courbe dépourvue d'arête et reliant une surface horizontale de la branche de superstructure et une surface horizontale de la branche de cuve.

17. Four verrier comportant :
- une cuve (12) comportant un bord supérieur (25) ;
- une structure métallique (14) ;
- une superstructure (16) comportant une strate intermédiaire (18) comportant une pièce à nez fondue (20) selon l'une quelconque des revendications précédentes la surface de pose reposant sur la structure métallique, la surface de cuve s'étendant en regard du bord supérieur de la cuve, et la superstructure reposant sur la surface de superstructure.

18. Procédé de fabrication d'une pièce à nez selon l'une quelconque des revendications 1 à 16, le procédé comprenant les étapes successives suivantes :
a) mélange de matières premières de manière à former une charge de départ ;
b) fusion de ladite charge de départ jusqu'à obtention d'un bain de matière en fusion ;
c) coulage de ladite matière en fusion dans un moule, et solidification de ladite matière en fusion par refroidissement, de manière à obtenir une pièce intermédiaire présentant la forme générale d'une pièce à nez et dont la surface en contact avec le moule présente une microstructure de peau ;
d) démoulage de la pièce intermédiaire ;
e) usinage partiel de la surface extérieure de la pièce intermédiaire, de manière à conserver au moins une partie de la surface présentant une microstructure de peau.

19. Procédé selon la revendication immédiatement précédente, dans lequel, à l'étape e), la surface de superstructure est usinée et/ou la surface de pose n'est pas usinée, et/ou la surface de cuve n'est pas usinée.

20. Procédé de fabrication d'un four comportant une cuve de fusion de verre, une superstructure s'étendant au-dessus de la cuve, et une structure métallique supportant la superstructure, ledit procédé comportant l'intégration, dans une strate intermédiaire entre la structure métallique (14) et une paroi latérale (26) de la superstructure (16), d'une pièce à nez selon l'une quelconque des revendications 1 à 16, les surfaces de pose et de superstructure étant respectivement en contact avec la structure métallique et la paroi latérale de la superstructure, et la surface de cuve étant en regard d'un bord supérieur (25) de la cuve (12).

## Patentansprüche

1. Geschmolzener Nasenstein, definierend
- eine untere Fläche (20₃), die umfasst:
- eine Auflagefläche (20₁₄), die dazu bestimmt ist, auf der Metallstruktur (14) eines Glasofens aufzuliegen,
- eine Wannenfläche (20₁₂), die dazu bestimmt ist, einem oberen Rand (25) einer Wanne (12) des Glasofens zugewandt zu sein,
- eine untere Übergangsfläche (20₁₄₋₁₂), die die Auflagefläche und die Wannenfläche verbindet,
- eine obere Fläche (20₅), die umfasst:
- eine Oberbaufläche (20₂₆), die dazu bestimmt ist, eine Seitenwand (26) eines Oberbaus (16) des Glasofens aufzunehmen,
- eine obere Übergangsfläche (20₂₆₋₃), die die Oberbaufläche (20₂₆) und die untere Fläche (20₃) verbindet,
**dadurch gekennzeichnet, dass** mindestens ein Teil der unteren Übergangsfläche eine Kristalldichte aufweist, die mehr als das Vierfache der Kristalldichte in einer Tiefe von 4 Zentimetern unter der unteren Übergangsfläche beträgt, wobei eine solche Fläche als Fläche "mit Hautmikrostruktur" bezeichnet wird, wobei eine Kristalldichte durch die Anzahl von Kristallen mit einem Flächeninhalt von mehr als 12 µm² je mm² Fläche nach dem Schleifen bewertet wird, wobei die Kristalldichte in der Tiefe an der exponierten Fläche nach einem Schneiden des Nasensteins in dieser Tiefe bewertet wird.

2. Nasenstein nach dem vorhergehenden Anspruch, bei dem mindestens ein Teil der oberen Übergangsfläche eine Fläche mit Hautmikrostruktur ist.

3. Nasenstein nach einem der vorhergehenden Ansprüche, bei dem die gesamte untere Fläche eine Fläche mit Hautmikrostruktur ist.

4. Nasenstein nach einem der vorhergehenden Ansprüche, bei dem mindestens ein Teil der Oberbaufläche eine Kristalldichte aufweist, die weniger als das Vierfache der Dichte in einer Tiefe von 4 Zentimetern unter der Oberbaufläche beträgt.

5. Nasenstein nach einem der vorhergehenden Ansprüche, bei dem eine Schicht aus einem Grenzflächenmaterial (40), die verformbar ist und/oder eine Wärmeleitfähigkeit von weniger als 1,0 W.m⁻¹.K⁻¹ aufweist, auf mindestens einem Teil einer Fläche mit Hautmikrostruktur angeordnet ist.

6. Nasenstein nach einem der vorhergehenden Ansprüche, der eine solche chemische Zusammensetzung in Massenprozent auf der Grundlage der Oxide aufweist, dass: Al₂O₃ + ZrO₂ + SiO₂ > 80,0 %.

7. Nasenstein nach einem der vorhergehenden Ansprüche, der in Massenprozent auf der Grundlage der Oxide mehr als 0,5 % und weniger als 10,0 % eines Zirkonstabilisators umfasst.

8. Nasenstein nach einem der vorhergehenden Ansprüche, der eine solche chemische Zusammensetzung in Massenprozent auf der Grundlage der Oxide aufweist, dass bei einer Summe von 100 %:
- Al₂O₃ + ZrO₂ + SiO₂ : mehr als 83,8 % und weniger 97,0 %,
- Y₂O₃: mehr als 0,5 % und weniger als 5,0 %,
- Na₂O: mehr als 0,1 % und weniger als 0,6 %,
- B₂O₃: mehr als 0,1 % und weniger als 0,6 %,
- andere Oxidspezies als Al₂O₃, ZrO₂, SiO₂, Y₂O₃, Na₂O und B₂O₃: weniger als 10,0 %.

9. Nasenstein nach einem der vorhergehenden Ansprüche, der eine solche chemische Zusammensetzung in Massenprozent auf der Grundlage der Oxide aufweist, dass:
- ZrO₂ : mehr als 12,0 % und weniger als 45,0 %,
- SiO₂ : mehr als 8,0 % und weniger als 24,0 %,
- Al₂O₃: mehr als 35,0 % und weniger als 60,0 %.

10. Nasenstein nach einem der Ansprüche 1-8, der eine solche chemische Zusammensetzung in Massenprozent auf der Grundlage der Oxide aufweist, dass
- ZrO₂ : mehr als 80,0 % und weniger als 97,0 %,
- SiO₂ : mehr als 0,5 % und weniger als 15,0 %,
- Al₂O₃: mehr als 0,2 % und weniger als 3,0 %.

11. Nasenstein nach dem vorhergehenden Anspruch, bei dem der mindestens eine Teil der unteren Übergangsfläche eine Kristalldichte von mehr als 650 Kristallen je mm² aufweist.

12. Nasenstein nach einem der Ansprüche 10 oder 11, bei dem der äquivalente mittlere Durchmesser der Kristalle des mindestens einen Teils der unteren Übergangsfläche weniger als 45 µm beträgt.

13. Nasenstein nach einem der vorhergehenden Ansprüche, bei dem die Auflagefläche einen einzigen Fuß oder eine Gruppe von Füßen definiert, wobei jeder Fuß eine Endfläche (44) aufweist, die dazu bestimmt ist, im Betrieb auf der Metallstruktur aufzuliegen, wobei die Endfläche keine Hautmikrostruktur aufweist.

14. Nasenstein nach dem unmittelbar vorhergehenden Anspruch, bei dem der Flächeninhalt der Endfläche des einzigen Fußes oder die Gesamtsumme der Flächeninhalte (S₄₄) der Endflächen der Füße mehr als 0,5 % und weniger als 10 % des Flächeninhalts der Auflagefläche ausmacht.

15. Nasenstein nach einem der beiden unmittelbar vorhergehenden Ansprüche, wobei Anspruch 5 gilt, bei dem das Grenzflächenmaterial den Raum füllt, der durch die Auflagefläche begrenzt wird und der sich bis zur Ebene der Endfläche(n) erstreckt.

16. Nasenstein nach einem der vorhergehenden Ansprüche, bei dem
- die obere Übergangsfläche an der Verbindungsstelle zwischen den Oberbau- und Wannenschenkeln eine obere Verbindungsfläche (21) umfasst, die gewölbt und gratfrei ist und eine horizontale Fläche des Oberbauschenkels und eine horizontale Fläche des Wannenschenkels verbindet, und/oder
- die untere Übergangsfläche an der Verbindungsstelle zwischen den Oberbau- und Wannenschenkeln eine untere Verbindungsfläche (23) umfasst, die gewölbt und gratfrei ist und eine horizontale Fläche des Oberbauschenkels und eine horizontale Fläche des Wannenschenkels verbindet.

17. Glasofen, umfassend:
- eine Wanne (12), die einen oberen Rand (25) umfasst;
- eine Metallstruktur (14);
- einen Oberbau (16), der eine Zwischenlage (18) umfasst, die einen geschmolzenen Nasenstein (20) nach einem der vorhergehenden Ansprüche umfasst, wobei die Auflagefläche auf der Metallstruktur aufliegt, wobei sich die Wannenfläche gegenüber dem oberen Rand der Wanne erstreckt und wobei der Oberbau auf der Oberbaufläche aufliegt.

18. Verfahren zur Herstellung eines Nasensteins nach einem der Ansprüche 1 bis 16, wobei das Verfahren die folgenden aufeinanderfolgenden Schritte beinhaltet:
a) Mischen von Grundstoffen, so dass ein Ansatz gebildet wird;
b) Schmelzen des Ansatzes, so dass ein Schmelzebad erhalten wird;
c) Gießen der Schmelze in eine Form und Verfestigen der Schmelze durch Abkühlen, so dass ein Zwischenstück erhalten wird, das die Grundform eines Nasensteins aufweist und dessen mit der Form in Kontakt stehende Fläche eine Hautmikrostruktur aufweist;
d) Entformen des Zwischenstücks;
e) teilweises Bearbeiten der Außenfläche des Zwischenstücks, so dass mindestens ein Teil der Fläche, die eine Hautmikrostruktur aufweist, erhalten bleibt.

19. Verfahren nach dem unmittelbar vorhergehenden Anspruch, bei dem im Schritt e) die Oberbaufläche bearbeitet wird und/oder die Auflagefläche nicht bearbeitet wird und/oder die Wannenfläche nicht bearbeitet wird.

20. Verfahren zur Herstellung eines Ofens, der eine Glasschmelzwanne, einen sich oberhalb der Wanne erstreckenden Oberbau und eine den Oberbau tragende Metallstruktur umfasst, wobei das Verfahren das Einbauen, in eine Zwischenlage zwischen der Metallstruktur (14) und einer Seitenwand (26) des Oberbaus (16), eines Nasensteins nach einem der Ansprüche 1 bis 16 umfasst, wobei die Auflage- und Oberbauflächen in Kontakt mit der Metallstruktur beziehungsweise der Seitenwand des Oberbaus sind und die Wannenfläche gegenüber einem oberen Rand (25) der Wanne (12) ist.

## Claims

1. Fused tuckstone defining
- a lower surface (20₃) comprising:
- a support surface (20₁₄) intended to rest on the metallic structure (14) of a glass furnace,
- a tank surface (20₁₂) intended to face an upper edge (25) of a tank (12) of said glass furnace,
- a lower transition surface (20₁₄₋₁₂) connecting the support surface and the tank surface,
- an upper surface (20₅) comprising:
- a superstructure surface (20₂₆) intended to receive a side wall (26) of a superstructure (16) of said glass furnace,
- an upper transition surface (20₂₆₋₃) connecting the superstructure surface (20₂₆) and the lower surface (20₃),
**characterized in that** at least a part of the lower transition surface has a crystal density of more than four times the crystal density at a depth of 4 centimeters below said lower transition surface, such a surface being described as a surface with "skin microstructure", a crystal density being evaluated by the number of crystals having a surface area of more than 12 µm² per mm² of surface after polishing, the crystal density at said depth being evaluated over the surface exposed after cutting of the tuckstone to said depth.

2. Tuckstone according to the preceding claim, wherein at least a part of the upper transition surface is a surface with skin microstructure.

3. Tuckstone according to any of the preceding claims, wherein the entire lower surface is a surface with skin microstructure.

4. Tuckstone according to any of the preceding claims, wherein at least a part of the superstructure surface has a crystal density of less than four times the density at depth of 4 centimeters below said superstructure surface.

5. Tuckstone according to any of the preceding claims, wherein a layer of an interfacing material (40), which is deformable and/or has a thermal conductivity of less than 1.0 W.m⁻¹.K⁻¹, is arranged on at least a part of a surface with skin microstructure.

6. Tuckstone according to any of the preceding claims, having a chemical composition in mass percentage based on oxides such that:
Al₂O₃ + ZrO₂ + SiO₂ > 80.0%.

7. Tuckstone according to any of the preceding claims, comprising, in mass percentage based on oxides, more than 0.5% and less than 10.0% of a zirconia stabilizer.

8. Tuckstone according to any of the preceding claims, having a chemical composition in mass percentage based on oxides such that, for a total of 100%:
- Al₂O₃ + ZrO₂ + SiO₂: more than 83.8% and less than 97.0%,
- Y₂O₃: more than 0.5% and less than 5.0%,
- Na₂O: more than 0.1% and less than 0.6%,
- B₂O₃: more than 0.1% and less than 0.6%,
- oxide types other than Al₂O₃, ZrO₂, SiO₂, Y₂O₃, Na₂O and B₂O₃: less than 10.0%.

9. Tuckstone according to any of the preceding claims, having a chemical composition in mass percentage based on oxides such that:
- ZrO₂: more than 12.0% and less than 45.0%,
- SiO₂: more than 8.0% and less than 24.0%,
- Al₂O₃: more than 35.0% and less than 60.0%.

10. Tuckstone according to any of claims 1 to 8, having a chemical composition in mass percentage based on oxides such that:
- ZrO₂: more than 80.0% and less than 97.0%,
- SiO₂: more than 0.5% and less than 15.0%,
- Al₂O₃: more than 0.2% and less than 3.0%.

11. Tuckstone according to the preceding claim, wherein said at least one part of the lower transition surface has a crystal density of more than 650 crystals per mm².

12. Tuckstone according to one of Claims 10 or 11, wherein the mean equivalent diameter of the crystals of said at least one part of the lower transition surface is less than 45 µm.

13. Tuckstone according to any of the preceding claims, wherein the support surface defines a single foot or a set of feet, each foot having a terminal face (44) intended to rest during use on the metallic structure, said terminal face having no skin microstructure.

14. Tuckstone according to the immediately preceding claim, wherein the area of the terminal face of the single foot or the cumulative sum of the areas (S₄₄) of the terminal faces of the feet represents more than 0.5% and less than 10% of the area of the support surface.

15. Tuckstone according to one of the two immediately preceding claims, wherein claim 5 applies, wherein the interfacing material fills the volume which is delimited by the support surface and which extends up to the plane of said terminal face or faces.

16. Tuckstone according to any of the preceding claims, wherein
- the upper transition surface, at the junction between the superstructure and tank arms, comprises a curved upper junction surface (21) with no ridges, which connects a horizontal surface of the superstructure arm and a horizontal surface of the tank arm, and/or
- the lower transition surface, at the junction between the superstructure and tank arms, comprises a curved lower junction surface (23) with no ridges, which connects a horizontal surface of the superstructure arm and a horizontal surface of the tank arm.

17. Glass furnace comprising:
- a tank (12) with an upper edge (25);
- a metallic structure (14);
- a superstructure (16) with an intermediate layer (18) comprising a fused tuckstone (20) according to any of the preceding claims, the support surface resting on the metallic structure, the tank surface extending facing the upper edge of the tank, and the superstructure resting on the superstructure surface.

18. Method for production of a tuckstone according to any of Claims 1 to 16, the method comprising the following successive steps:
a) mixing of raw materials so as to form a starting batch;
b) fusion of said starting batch to obtain a bath of molten material;
c) casting of said molten material in a mold, and solidification of said molten material by cooling so as to obtain an intermediate piece which has the general form of a tuckstone, and the surface of which in contact with the mold has a skin microstructure;
d) removal of said intermediate piece from the mold;
e) partial machining of the outer surface of the intermediate piece so as to retain at least part of the surface with a skin microstructure.

19. Method according to the immediately preceding claim, wherein in step e), the superstructure surface is machined and/or the support surface is not machined, and/or the tank surface is not machined.

20. Method for production of a furnace comprising a glass melting tank, a superstructure extending above the tank, and a metallic structure supporting the superstructure, said method comprising the integration of a tuckstone according to any of Claims 1 to 16 in an intermediate layer between the metallic structure (14) and a side wall (26) of the superstructure (16), the support and superstructure surfaces being in contact with the metallic structure and the side wall of the superstructure respectively, and the tank surface facing an upper edge (25) of the tank (12).
